# FASCICULE DE BREVET EUROPEEN

(11) **EP 0 938 390 B1**
(45) Date de publication et mention de la délivrance du brevet: **12.07.2000**
(21) Numéro de dépôt: 97947071.3
(22) Date de dépôt: 17.11.1997
(51) Int. Cl.: B21D 1/12

(54) **DISPOSITIF ET PROCEDE POUR REDRESSER DES ELEMENTS METALLIQUES ET PLASTIQUES ENDOMMAGES**
VORRICHTUNG UND VERFAHREN ZUM RICHTEN METALLISCHER UND PLATISCHERVERFORMTER TEILEN
DEVICE AND METHOD FOR STRAIGHTENING OUT DAMAGED METAL AND PLASTIC ELEMENTS

(30) Priorité: 18.11.1996 FR 9614129; 29.10.1997 FR 9713547
(43) Date de publication de la demande: 01.09.1999
(73) Titulaire: Sarrion, Sanchez Christian, 91590 La Ferté Alais (FR)
(72) Inventeur: Sarrion, Sanchez Christian, 91590 La Ferté Alais (FR)
(74) Mandataire: Verdier, Louis
(86) Numéro de dépôt international: FR9702059
(87) Numéro de publication internationale: WO9822235

(56) Documents cités:
- DE-U- 9 403 156
- US-A- 2 804 118
- US-A- 4 171 631

## Description

La présente invention concerne un dispositif et un procédé pour redresser des éléments métalliques et plastiques endommagés, notamment ayant reçu des chocs tout en gardant les formes initiales.

Le document DE 94 03 156 U (ROTH MATTHIAS) décrit un dispositif de redressement de pièces en matière métallique, selon le préambule de la revendication 1 et une méthode selon le préambule de la revendication 6. Ce dispositif redresse les pièces au moyen d'un corps pouvant s'expanser par un milieu le corps étant placé entre une butée et la pièce. Le dispositif décrit dans ce document ne comprend pas de gabarit qui a la forme originelle de l'élément à redresser. De plus, le dispositif décrit dans ce document ne comporte pas de moyen chauffant la partie à redresser.

Le document US 4 171 631 (13UTTS CLIFFORE) décrit un dispositif pour redresser une porte de véhicule et n'est pas destiné à redresser une pièce quelconque d'automobile. Ce dispositif comporte un ballon expansible qui est placé à l'intérieur d'une portière, savoir entre les parois de la portière. En aucun cas, on ne place une butée externe à la pièce, sur laquelle vient s'appuyer le ballon, car la paroi interne de la portière joue ce rôle de butée. Ce dispositif ne permet donc que de redresser des pièces comportant deux parois et son utilisation est donc limitée. De plus, ce dispositif ne comporte pas un gabarit ayant la forme d'origine de la pièce à redresser. En outre, il ne comporte pas de moyens de chauffage de la partie de la pièce à redresser.

Le document US 2 804 118 (BAYERKOHLER) décrit dans sa figure 1 un dispositif pour redresser des carrosseries automobiles qui comporte deux plaques de pression que l'on dispose entre deux parois d'une portière automobile, la paroi étant déformée . Ce document ne décrit ni ne suggère l'utilisation d'un gabarit qui a la forme originelle de la pièce à redresser. Ce document ne décrit pas non plus l'utilisation d'un élément chauffant la partie à redresser.

Actuellement le redressage est fait au moyen d'outils de formes différentes, en se servant soit du principe du levier, soit par des points de soudure faits à l'extérieur de la partie endommagée, ce qui, généralement, entraîne de la corrosion et neutralise toutes les protections (galvanisées ou autres) de l'élément redressé.

Ainsi, un procédé actuel consiste à mettre à nu la tôle et de souder sur celle-ci des petites pastilles évidées sur un point de leur périphérie. L'extrémité d'un outil formant crochet vient se loger pour s'accrocher dans l'évidement d'une pastille. Un marteau à coulisseau permet de donner des coups sur l'extrémité opposée de l'outil de manière à tirer sur la tôle et à la redresser. Après avoir terminé le redressement, on élimine les pastilles grâce à l'outil, en effectuant une rotation, puis on enlève le point de soudure, par exemple à l'aide d'un disque a ébarber, puis on mastique la tôle. Un tel procédé a pour finalité de réduire sensiblement l'épaisseur de la tôle et par conséquent de la fragiliser.

La présente invention a pour but de remédier aux inconvénients des moyens connus et concerne à cet effet un dispositif de redressage d'éléments déformés d'un emploi facile , sur, efficace et simple à mettre en oeuvre.

L'invention permet d'effectuer un redressage sans altérer les éléments de surface environnants comme la peinture, l'apprêt, la galvanisation et l'électrozingage.

L'invention permet encore de fournir un dispositif de redressement d'éléments déformés en préservant l'élasticité d'origine de l'élément à traiter et de ce fait la sécurité passive des utilisateurs du véhicule.

L'invention présente l'avantage de fournir un dispositif permettant le redressement d'éléments déformés tout en préservant de la corrosion les éléments redressés.

Le dispositif suivant l'invention autorise le redressement d'éléments déformés, même dans les cas ou ils sont difficilement accessibles.

L'invention autorise donc le redressement d'éléments déformés tout en facilitant les opérations de redressage, ce qui permet de réduire les temps d'intervention , de réaliser des économies de matériaux, d'améliorer la sécurité des intervenants, ces divers gains se reflétant sur le coût final des remises en état et de leur qualité.

A cet effet, le dispositif de redressage d'élément déformé selon la présente invention est défini dans la revendication 1.

Le moyen exerçant une pression sur l'élément déformé est un ballon gonflé à l'aide d'un fluide dont la pression est contrôlée.

Par ailleurs, le dispositif selon l'invention comporte deux gabarits ayant la forme originelle de l'élément déformé prenant en sandwich ledit élément déformé, dont l'un est placé à l'intérieur de l'élément déformé et dont l'autre est placé à l'extérieur de celui-ci, des vérins souples et des supports appropriés agissant sur lesdits gabarits pour former une presse.

Le dispositif selon l'invention peut comporter en outre une tige articulée, formant tube, dans laquelle passe un fluide, dont une extrémité supporte le ballon et dont l'autre extrémité est munie d'un manomètre contrôlant la pression à l'intérieur du ballon.

Le dispositif peut en outre être doté d'un moyen protecteur du ballon.

Selon un mode de réalisation de l'invention, le gabarit ayant la forme originelle de l'élément déformé est constitué d'une matière thermoplastique , par exemple une résine thermoplastique ,coulée à chaud ou une matière durcissable environ à température ambiante ou à froid , dans un élément de carrosserie d'origine non déformé de manière à servir de moule.

Par ailleurs, lorsqu'on fabrique un gabarit avec une résine, celle-ci a une certaine flexibilité. Il est donc nécessaire d'armer les gabarits avec des tiges d'acier. En ce qui concerne les arêtes et pour mieux les planer, on peut aussi utiliser des cornières adaptées.

Suivant cette caractéristique on peut également fabriquer un tas adapté à toutes les formes et l'épaisseur de la tôle , en armant lesdits tas d 'éléments d'un poids suffisant.

Selon un mode de réalisation de l'invention, l'élément à redresser est une tôle métallique.

Selon un autre mode de réalisation, l'élément à réparer est une matière synthétique renforcée par des fibres.

Selon un autre mode de réalisation, l'élément à redresser est une matière synthétique sans fibres.

Le dispositif selon l'invention comporte éventuellement un émetteur ultrasons agissant sur l'élément déformé pour le faire vibrer.

Enfin, selon un mode de réalisation de l'invention, le dispositif comporte une mémoire informatique et un logiciel recueillant et traitant des données concernant les divers éléments du dispositifs, comme les formes des gabarits, les pressions internes des ballons, etc.

L'invention concerne en outre un procédé de réparation d'éléments déformés.

Le procédé de réparation d'éléments déformés selon l'invention est défini dans la revendication 6.

Le moyen exerçant la pression est constitué par un ou plusieurs ballons remplis d'un fluide sous pression contrôlée.

Le dispositif, selon, l'invention, permet de redresser tout corps creux métallique et certains plastiques, sans endommager ni la partie métallique ou plastique, ni le traitement antérieur des parties, et de garder les finitions identiques à celles d'origine.

Le dispositif, selon l'invention, permet entre outre de remédier aux inconvénients déjà cités, mais de plus assure une très grande sécurité pour les professionnels procédant à la remise en état des éléments redressés grâce à une atténuation considérable des bruits dus aux chocs et l'absence de soudures.

Le dispositif selon l'invention, s'applique préférentiellement mais non limitativement à la remise en état d'éléments de carrosserie de véhicules automobiles, mais il peut également être utilisé dans d'autres secteurs d'activités chaque fois où il est nécessaire d'intervenir pour redresser des éléments métalliques ou plastiques déformés.

Ce but est atteint grâce à la mise en oeuvre de ballons ou de vérins souples, gonflés ou actionnés, respectivement, par des fluides, tels que air, eau, huile, utilisés comme éléments de pression.

Une autre particularité de l'invention concerne l'utilisation d'un élément chauffant ayant pour but de dilater et assouplir les éléments à redresser.

Une particularité spécifique de l'invention réside dans l'utilisation de gabarits préformés servant à ramener l'élément à redresser dans sa forme d'origine.

Le ballon peut être inséré très facilement dans le corps creux déformé, la partie arrière dudit ballon s'appuie sur le renfort de l'élément ( partie interne d'une portière, par exemple ), ou sur une barre d'appui préalablement posée ou fixée à l'aide de griffes magnétiques ou de ventouses.

La partie externe du corps creux à redresser comporte un autre gabarit, en appui à l'aide de vérins souples eux-mêmes fixés sur un ou plusieurs supports externes; lesdits supports étant fixés à l'aide de pattes de fixation adaptables et interchangeables ou de griffes magnétiques ou de ventouses avec pompe à vide. Ces moyens associés ont pour but de presser la tôle ou le plastique déformé, à chaud ou à froid, laquelle est ainsi prise en sandwich entre les deux gabarits.

La partie avant du ballon pousse le gabarit de la forme originelle de l'élément.

La description suivante, en regard des dessins annexés permettra de comprendre comment l'invention peut être mise en oeuvre

La Figure 1 est une vue schématique d'un dispositif de redressement placé en position avant le redressement de l'élément à redresser.

La Figure 2 est une vue schématique du dispositif de la Figure 1, dans une étape intermédiaire de redressement.

La Figure 3 est une vue une vue schématique du dispositif de la Figure 1, après redressement de l'élément à redresser.

Les Figures 4A, 4B et 4C sont des vues schématiques d'un autre dispositif respectivement avant le redressement de l'élément à redresser, pendant son redressement, et après son redressement.

La Figure 5 est une vue d'une partie de véhicule à redresser et un dispositif mis en place pendant le redressement.

La Figure 6 est une vue schématique d'un dispositif comportant des vérins souples comme moyens exerçant une pression.

La Figure 7 est une vue détaillée de la Figure 6.

La Figure 8 est une vue schématique montrant la forme du renfort utilisé pour le redressement d'une aile de véhicule.

Les Figures 9,10 et 11 montrent la mise en place des dispositifs conforme à l'invention à l'intérieur et à l'extérieur du corps creux déformé à redresser.

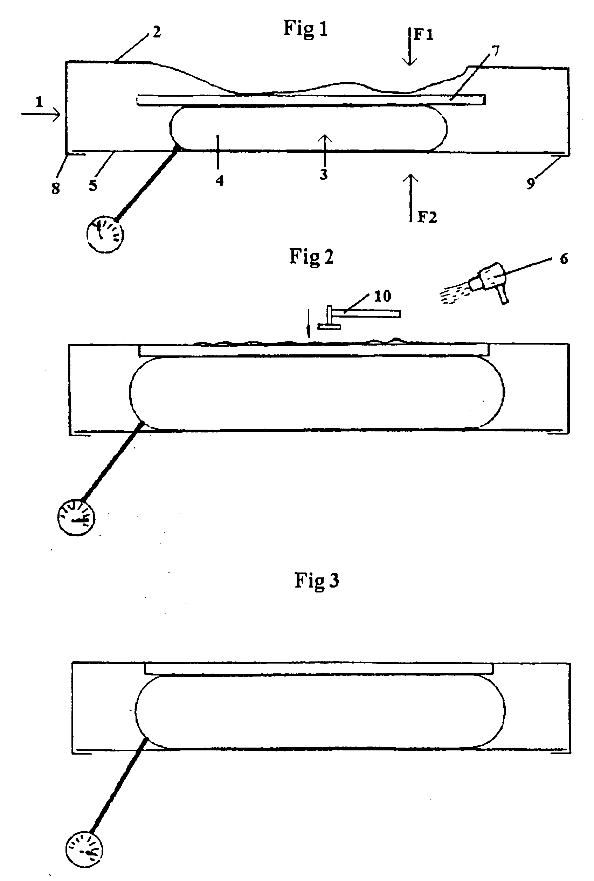

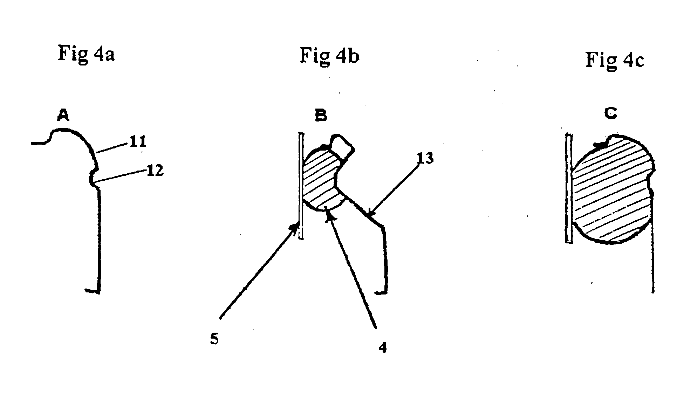

Le dispositif 1 de redressage de l'élément déformé 2 comprend, un moyen 3 exerçant une pression sur l'élément déformé 2 . Sur les Figures 1 à 5, le moyen exerçant une pression est un ballon.

Le moyen 3 exerçant une pression s'appuie sur un renfort d'appui qui est solidarisé à l'élément déformé 2. Ainsi sur les Figures 1 à 3, le ballon 4, lorsqu'il est gonflé, s'appuie d'une part sur le renfort d'appui 5 et sur l'élément 2 à redresser.

Le dispositif comporte en outre un moyen chauffant 6 l'élément déformé 2 et éventuellement un gabarit 7 ayant la forme originelle de l'élément à redresser.

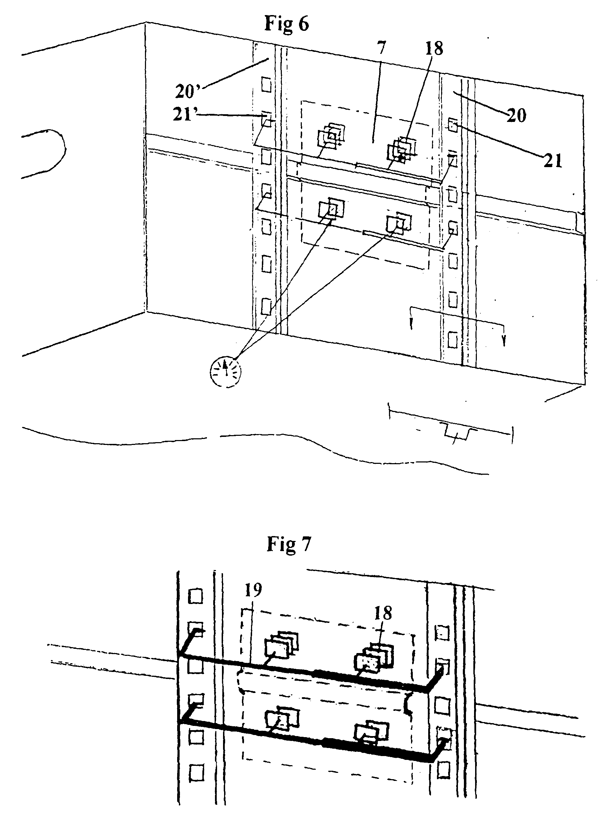

Un procédé de redressement d'un élément déformé non conforme à l'invention est le suivant: on introduit un ballon non gonflé du côté opposé au côté ayant subi la déformation. Ainsi, si l'élément a été déformé par une pression dans les sens de la Flèche F1, on introduit le ballon 4 dans le sens opposé au sens de la déformation, à savoir selon la Flèche F2. Puis, on place un renfort 5 de manière que le ballon 4 soit situé entre la partie déformée de l'élément et le renfort 5. Le renfort 5 a le plus souvent une forme de plaque, comme représenté sur les Figures 1 à 5, mais il peut avoir des formes différentes comme représenté sur les Figures 6 à 8. Ces formes seront explicitées dans la suite de la description. Le renfort 5, est selon le mode de réalisation représente sur les Figures 1 à 3, maintenu à ses extrémités par les retours 8 et 9 de la pièce comportant l'élément à redresser.
Le procédé consiste ensuite à remplir le ballon par un fluide. Le ballon 4 exerce alors une pression dans le sens de la Flèche F2 sur la partie déformée. Cette partie reprend une forme sensiblement identique à celle d'origine. Cependant, comme il peut subsister des imperfections dans le périmètre de la déformation, le procédé consiste à chauffer la partie déformée à l'aide un moyen chauffant, constitué par exemple un pistolet soufflant de l'air chaud, un pistolet thermique à infrarouge, ou autre. Pour parfaire la disparition des imperfections , on peut frapper légèrement la partie déformée à l'aide d'une batte 10, d'un poids adapté à l'épaisseur de la tôle.

On dispose pour la finition d'une lumière rasante pour mettre en évidence les dernières imperfections pour les traiter en conséquence.

L'élément ainsi traité, reprend alors sa forme d'origine, comme représenté sur la Figure 3.

Le ballon peut s'insérer facilement dans un corps creux, il prend appui sur le renfort et se positionne en prenant toutes les formes désirées , il a la fonction d'un vérin souple quand il est gonflé.

Selon l'invention, on contrôle le gonflage du ballon, par exemple à l'aide d'un manomètre. Ainsi, on peut gonfler le ballon à une pression qui peut augmenter de 100 g à 200 g ou plus, si lors du premier redressement l'élément n'a pas repris exactement sa forme d'origine.

Le ballon peut épouser toute forme géométrique souhaitée, ronde, carrée, boudinée, rectangulaire, et être réalisée en toute matière désirée, par exemple en caoutchouc ou en élastomère de synthèse ou autre.

Sur les Figures 1 à 3, on a représenté un gabarit 7 qui permet à l'élément déformé de reprendre sa forme d'origine.

L'élément déformé peut être métallique ou en matière synthétique renforcée par des fibres.

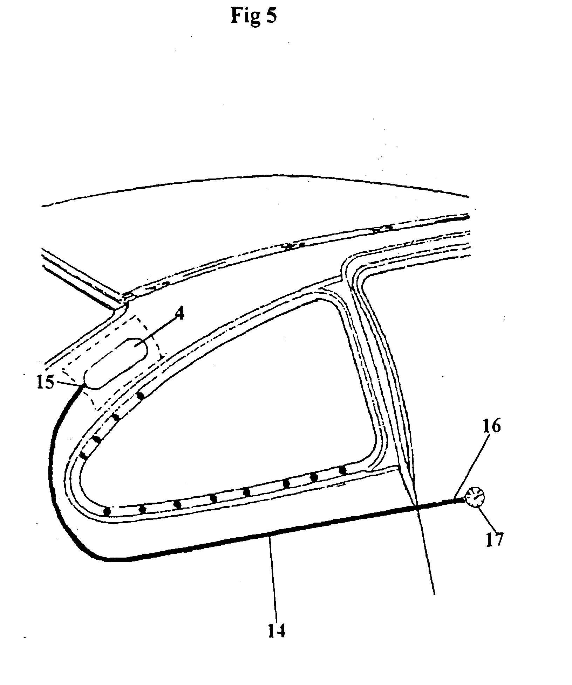

Comme on l'a représenté sur la Figure 5, le ballon 4 possède une tige articulée 14 formant tube, dans laquelle circule un fluide, dont une extrémité 15 supporte le ballon 4 et dont l'extrémité opposée 16 est munie d'un contrôleur de pression 17, constitué par exemple , par un manomètre.

Le fluide qui permet de gonfler le ballon est de préférence un fluide neutre tel que de l'air comprimé, ce qui permet d'éviter des accidents d'explosions, d'inflammations, etc.

La tige articulée permet l'introduction aisée du ballon à l'intérieur d'une pièce creuse, comme par exemple une aile de véhicule.

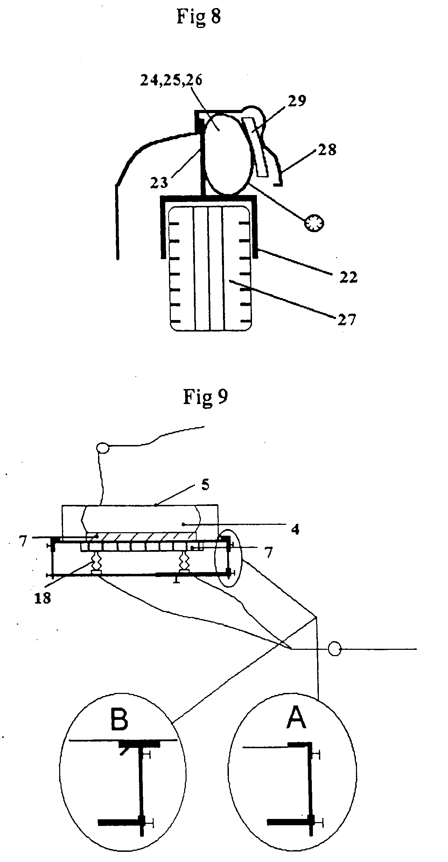

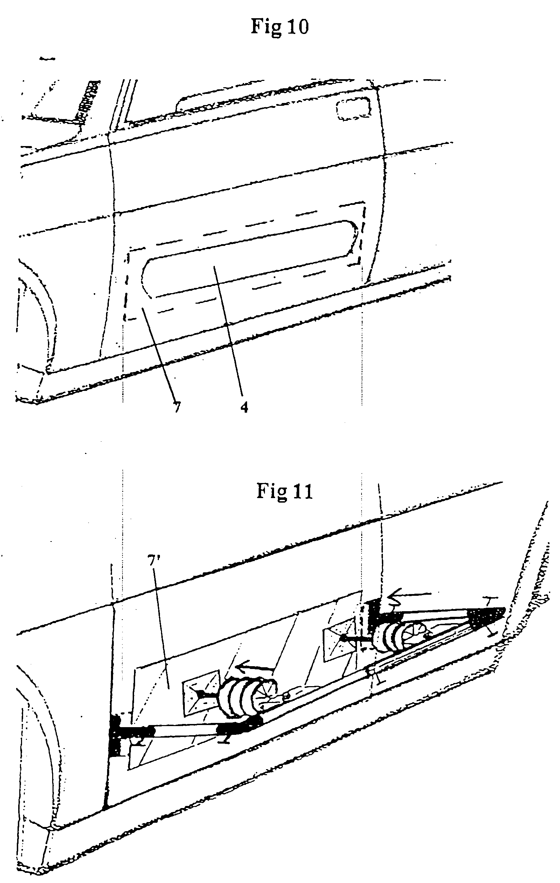

Le dispositif selon l'invention comporte un support externe ( tel que représenté aux Figures 9, 10 et 11) ledit support est placé sur la face externe de l'élément creux déformé à redresser, ce qui permet d' emprisonner en sandwich la partie déformée entre le ballon 4 muni d'un gabarit 7 et un autre gabarit **7'** extérieur en appui à l'aide de vérins souples fixés sur le support extérieur et formant presse.

Selon un autre dispositif non conforme à l'invention, représenté sur les Figures 6 et 7, le moyen exerçant une pression sur l'élément déformé est un système d'au moins un vérin 18 disposé sur un support 19 de vérin, le support 19 de vérin étant solidaire d'au moins un renfort 20 d'appui.

De préférence, ce dispositif comprend deux renforts d'appui 20, 20' de forme longitudinale ,fixés à la pièce de carrosserie comportant l'élément déformé. Ainsi, la pièce de carrosserie peut être un panneau de conteneur de camion. Les renforts peuvent par exemple comporter une série de trous 21, 21' dans lesquels sont introduits les extrémités de supports 19 de vérins 18. De préférence, les supports 19 sont constitués de deux tiges coulissantes l'une par rapport à l'autre, ce qui permet d'adapter la longueur du support 19 à l'écartement des renforts 20 et 20'. Plusieurs supports peuvent être placés l'un au dessus de l'autre et plusieurs vérins 18 peuvent être solidaires de ces supports. Si les renforts ne comportent pas de trous, on peut facilement les réaliser par des perçages appropriés ou utiliser des griffes magnétiques ou des ventouses à pompe à vide, fixées sur les parties plates internes de la carrosserie. Sur la Figure 7, le gabarit **7** est représenté en pointillés.

La Figure 8, représente un renfort 22 plus spécialement réalisé pour la réparation d'ailes avant de voitures automobiles; Ce renfort 22 qui, en coupe transversale, a la forme d'un U est muni d'une plaque 23 perpendiculaire au U. La partie en forme de U, prend appui sur la roue d'un véhicule. La plaque 23 est destinée à jouer le rôle support d'appui du ou des ballons 24, 25, 26, lequel , lesquels est ou sont disposé(s) entre la plaque 23 , dans le passage de roue 27 , l'élément d'aile à redresser 28 et le gabarit 29.

Le gabarit peut être réalisé en coulant une résine thermodurcissable chauffée dans un élément de carrosserie, par exemple un aile du même type non déformée, qui sert alors de moule. En refroidissant, le résine durcit et on démoule ensuite le gabarit ainsi obtenu.

Le procédé suivant la présente invention peut être utilisé pour redresser des éléments métalliques ou des éléments en matière synthétique sans fibres. Lorsque l'élément à redresser est en matière synthétique avec fibres, les chocs reçus engendrent le plus souvent une cassure de l'élément. On dispose alors à l'intérieur de la pièce à réparer, c'est-à-dire du côté interne, une toile imprégnée de résine. Contre cette toile on dispose un renfort d'appui et un gabarit. La toile et le renfort sont disposés de manière à être placés de chaque côté de la cassure. Puis, on gonfle le ballon et on éventuellement on chauffe. Les deux côtés de la cassure sont ainsi maintenus fermement et il est alors possible d'effectuer la réparation en face externe d'une manière traditionnelle.

Suivant une autre variante de réalisation de l'invention, il est aussi possible d'utiliser un émetteur ultrasons ayant pour but de faire vibrer la tôle et l'aider ainsi à reprendre sa forme d'origine, ce qui permet d'améliorer considérablement le rendement et la planification de la tôle de l'élément à traiter.

## Revendications

1. Dispositif de redressage d'élément déformé comprenant un moyen exerçant une pression sur l'élément déformé, et au moins un renfort d'appui solidarisé à l'élément déformé, le moyen exerçant une pression (3) sur l'élément déformé (2) étant un ballon (4) gonflé au moyen d'un fluide dont la pression est contrôlée,
dispositif caractérisé par un moyen chauffant l'élément déformé,
le dispositif comportant deux gabarits ayant la forme originelle de l'élément déformé prenant en sandwich ledit élément déformé, dont l'un est placé à l'intérieur de l'élément déformé et dont l'autre est placé à l'extérieur de celui-ci, des vérins souples et des supports appropriés agissant sur lesdits gabarits pour former une presse.

2. Dispositif selon la revendication 1
caractérisé en ce que
les gabarits ayant la forme originelle de l'élément déformé est constitué d'une matière thermoplastique qui est coulée à chaud ou une matière durcissable environ à température ambiante, dans un élément de carrosserie d'origine non déformé servant de moule, par exemple une résine thermoplastique.

3. Dispositif selon la revendication 2 précédente
caractérisé en ce
qu'on arme les gabarits avec des tiges d'acier et en ce que, pour les arêtes et pour mieux les planer, on utilise des cornières adaptées.

4. Dispositif selon l'une quelconque des revendications 1 à 3 précédentes
caractérisé en ce
qu'il comporte un émetteur ultrasons agissant sur l'élément déformé pour le faire vibrer.

5. Dispositif selon l'une quelconque des revendications 1 à 4 précédentes
caractérisé en ce
qu'il comporte une mémoire informatique et un logiciel recueillant et traitant des données concernant les caractéristiques de l'élément à redresser, notamment sur sa forme originelle, ainsi que divers éléments comme les formes des gabarits, les pressions internes des ballons, la température du moyen chauffant.

6. Procédé de réparation d'éléments déformés comprenant les étapes suivantes :
On introduit au moins un moyen exerçant une pression sur l'élément déformé du côté opposé au côté ayant subi la déformation, ce moyen exerçant la pression (3) par un ou plusieurs ballons (4) remplis d'un fluide sous une pression contrôlée,
On place un renfort de manière que le moyen exerçant la pression soit situé entre la partie déformée de l'élément et le renfort,
On active le moyen exerçant la pression,
procédé caractérisé en ce qu'on met en oeuvre deux gabarits ayant la forme originelle de l'élément déformé prenant en sandwich ledit élément déformé, dont l'un est placé à l'intérieur de l'élément déforme et dont l'autre est placé à l'extérieur de celui-ci, des vérins souples et des supports appropriés agissant sur lesdits gabarits pour former une presse,
On chauffe la partie déformée par un moyen chauffant et éventuellement, on frappe la partie déformée à l'aide d'une batte adaptée à l'épaisseur de la tôle,
On dispose, pour la finition, d'une lumière rasante pour mettre en évidence les dernières imperfections pour les traiter en conséquence.

## Patentansprüche

1. Vorrichtung zum Richten eines verformten Teiles mit einem auf das verformte Teil Druck ausübenden Element und mit zumindest einem die Abstützung verstärkenden Element, das mit dem verformten Teil fest verbunden ist, wobei das auf das verformte Teil (2) Druck ausübende Element (3) ein mit Hilfe eines Fluid aufgepumpter Ballon (4) ist, dessen Druck steuerbar ist,
gekennzeichnet durch
ein das verformte Teil erhitzendes Element, wobei die Vorrichtung zwei Schablonen aufweist, die die Ursprungsform des verformten Teils haben und die das besagte verformte Teil in Sandwichweise zwischen sich aufnehmen und von denen das eine an der Innenseite des verformten Teils und das andere an seiner Aussenseite angebracht ist, sowie gelenkige Hubzylinder und geeignete Halter, die auf die besagten Schablonen einwirken, um eine Presse zu bilden.

2. Vorrichtung nach Anspruch 1, dadurch gekennzeichnet, dass die Schablonen, die die Ursprungsform des verformten Teils aufweisen, aus einer thermoplastischen Masse gebildet sind, welche heiss oder aus einer ungefähr bei Umgebungstemperatur härtbare Masse gegossen wird, in ein originales, nicht verformtes Karrosserieteil, das als Formteil dient, beispielsweise ein thermoplastisches Harz.

3. Vorrichtung nach dem vorhergehenden Anspruch 2, dadurch gekennzeichnet, dass die Schablonen mit Stahldraht bewehrt werden und dass für die Kanten und um sie besser zu glätten, geeignete Winkel benützt werden.

4. Vorrichtung nach einem der vorhergehenden Ansprüche 1-3, dadurch gekennzeichnet, dass sie einen Ultraschallkopf aufweist, der auf das verformte Teil einwirkt, um es in Vibrationen zu versetzen.

5. Vorrichtung nach einem der vorhergehenden Ansprüche 1-4, dadurch gekennzeichnet, dass sie einen Speicher und eine Software aufweist, die die Daten empfängt und auswertet, welche die Merkmale des zu richtenden Teils beinhalten, insbesondere bezüglich seiner Ursprungsform, sowie verschiedene Elemente, wie die Formen der Schablonen, den Innendruck des Ballons, die Temperatur des Heizelementes.

6. Verfahren zum Reparieren von verformten Teilen, das die folgenden Schritte aufweist:
Einführen von zumindest einem auf das verformte Teil Druck ausübenden Elementes von der Seite, die der Seite, die die Verformung erlitten hat, gegenüberliegt, wobei dieses Element (3) durch einen oder mehrere Ballons (4), gefüllt mit einem Fluid unter steuerbarem Druck, den Druck ausübt,
Einlegen einer Verstärkung so, dass das Druck ausübende Element zwischen dem verformten Teil des Elementes und der Verstärkung liegt,
Aktivieren des den Druck ausübenden Elementes,
dadurch gekennzeichnet, dass zwei Schablonen eingesetzt werden, die die Ursprungsform des verformten Teils aufweisen und dieses genannte verformte Teil in Sandwichweise zwischen sich aufnehmen, wobei die eine an der Innenseite des verformten Teils und die andere andere an seiner Aussenseite festgelegt ist, und gelenkige Hubzylinder und geeignete Halter auf die genannten Schablonen einwirken, um eine Presse zu bilden,
dass das verformte Teil mit einem Heizelement erhitzt und eventuell das verformte Teil mit Hilfe eines der Dicke des Bleches entsprechenden Schlichthammers geklopft und für die Endarbeit ein Streiflicht verwendet wird, um die letzten Fehlerstellen zu ermitteln und um sie entsprechend zu bearbeiten.

## Claims

1. A device for reshaping a deformed element comprising a means for applying pressure to the deformed element and at least one support brace joined to the deformed element, the means for applying pressure (3) to the deformed element (2) being a balloon (4) inflated by means of a fluid, the pressure of which is controlled, said device being characterised by a means for heating the deformed element, the device having two templates having the original shape of the deformed element and holding said deformed element in a sandwich arrangement, one of which is placed inside said deformed element whilst the other is placed outside it, flexible jacks and appropriate supports acting on said templates to form a press.

2. A device as claimed in claim 1 characterised in that the templates having the original shape of the deformed element are made by hot-moulding from a thermoplastic material or a material that is curable at approximately ambient temperature in an initial bodywork component that is not deformed and acts as a mould, for example a thermoplastic resin.

3. A device as claimed in claim 2 above, characterised in that the templates are reinforced with steel rods and specially adapted angle irons are used to form and improve planing of the edges.

4. A device as claimed in any one of claims 1 to 3 above, characterised in that it has an ultrasound emitter acting on the deformed element, causing it to vibrate.

5. A device as claimed in any one of claims 1 to 4 above, characterised in that it has a computer memory and a software programme acquiring and processing data relating to the characteristics of the element to be reshaped, in particular relating to its original shape, as well as various other aspects such as the shape of the templates, the internal pressures of the balloons, the temperature of the heating means.

6. A method of repairing deformed elements comprising the following steps:
at least one means which applies a pressure to the deformed element is placed on the side opposing the side of the element that was deformed, this means (3) applying pressure by means of one or more balloons (4) filled with fluid at a controlled pressure;
a brace is placed so that the means applying the pressure is located between the deformed area of the element and the brace;
the means for applying pressure is activated;
the method being characterised in that two templates having the original shape of the deformed element are used to receive said deformed element in a sandwich arrangement, one of these being placed inside the deformed element and the other being placed outside it, flexible jacks and appropriate supports acting on said templates in order to form a press;
the deformed area is heated by a heating means and optionally, the deformed area is beaten by means of a beater adapted to the thickness of the sheet;
for finishing, a light is positioned so as to show up any final imperfections so that they can be treated accordingly.
